# EUROPÄISCHE PATENTSCHRIFT

(11) **EP 1 238 827 B1**
(45) Veröffentlichungstag und Bekanntmachung des Hinweises auf die Patenterteilung: **03.11.2004**
(21) Anmeldenummer: 01105561.3
(22) Anmeldetag: 06.03.2001
(51) Int. Cl.: B60C 11/03, B60C 11/13, B60C 11/12

(54) **Reifenprofil**
Tread pattern
Sculpture de bande de roulement

(43) Veröffentlichungstag der Anmeldung: 11.09.2002
(73) Patentinhaber: Continental Aktiengesellschaft, 30165 Hannover (DE)
(72) Erfinder: HANEBUTH, Katja, 30163 Hannover (DE); METZ, Markus, 30167 Hannover (DE); JENNE, Frank, 85051 Ingolstadt (DE); WACKERHAGE, Tanja, 31228 Peine (DE); SYCH, Thomas, 30900 Wedemark (DE)

(56) Entgegenhaltungen:
- EP-A- 0 722 851
- EP-A- 0 788 898
- US-A- 5 105 864
- PATENT ABSTRACTS OF JAPAN vol. 1998, no. 03, 27. Februar 1998 (1998-02-27) & JP 09 300917 A (TOYO TIRE &RUBBER CO LTD), 25. November 1997 (1997-11-25)
- PATENT ABSTRACTS OF JAPAN vol. 1998, no. 01, 30. Januar 1998 (1998-01-30) & JP 09 226322 A (BRIDGESTONE CORP), 2. September 1997 (1997-09-02)

## Beschreibung

Die Erfindung betrifft einen Fahrzeugluftreifen mit einem drehsinngebunden ausgeführten Laufflächenprofil mit zwei Schulterbereichen, die jeweils Bestandteile einer Schulterblockreihe sind, und mit einem von diesen durch in Umfangsrichtung umlaufende Umfangsnuten getrennten Mittelbereich, welcher, unter Einschluss der Breite der Umfangsnuten, eine Mindestbreite von 65 % der Laufflächenbreite aufweist, von in Umfangsrichtung durchgehend umlaufenden Umfangsnuten frei ist und mit einer Vielzahl von V-förmig verlaufenden Rillen versehen ist, die in die Umfangsnuten münden und deren V-Spitzen zumindest im Wesentlichen auf der Äquatorlinie liegen.

Ein Fahrzeugluftreifen mit einer derart ausgeführten Lauffläche ist beispielsweise aus der EP-A1-0 788 898 bekannt. Im Mittelbereich der Lauffläche sind die in Umfangsrichtung aufeinander folgenden V-förmig verlaufenden Rillen abwechselnd links und rechts der Äquatorlinie durch gegensinnig zu ihrem Verlauf ausgerichtete Nuten verbunden. Gemeinsam mit weiteren, vergleichweise schmalen Nuten, die jeweils etwa halbmittig zwischen den V-Spitzen der Rillen und den äußeren Umfangsnuten angeordnet sind, erfolgt eine Gliederung des Mittelbereichs in Profilpositive.

Ein Laufflächenprofil, welches keine in Umfangsrichtung durchgehend umlaufende Nuten aufweist, ist aus der DE-A1-38 34 383 bekannt. Die Profilrillen sind so angeordnet, dass eine drehsinngebundene Lauffläche entsteht, die aus einer Vielzahl von schräg orientierten, spitzwinkelig zur Äquatorlinie verlaufenden Profilpositiven besteht. Die Profilpositive und die Rillen in der einen Laufflächenhälfte sind zu jenen in der anderen Laufflächenhälfte entgegen gerichtet.

Durch diese Ausgestaltung soll eine besonders gute Drainagefähigkeit sichergestellt werden.

Eine ähnliche Ausgestaltung weist das aus der DE-A1-39 42 043 bekannte Laufflächenprofil auf. Parallel zu den Profilpositiven und Profilrillen sind von den Schulterbereichen ausgehend Quereinschnitte von geringer Breite vorgesehen, durch die die Nassrutschfestigkeit und das Geräuschniveau des Laufflächenprofils verbessert werden sollen.

Bei diesen aus dem Stand der Technik bekannten Varianten von drehsinngebundenen Laufflächenprofilen steht es im Vordergrund, ein gutes Drainagevermögen zum Verhindern des Auftretens von Aquaplaning zu erreichen. Die vorgeschlagenen Maßnahmen leisten zwar diesbezüglich einen gewissen Beitrag, können jedoch den immer höher werdenden Anforderungen nicht mehr gerecht werden.

Hier setzt nun die Erfindung ein, der die Aufgabe zu Grunde liegt, bei einem Fahrzeugluftreifen der eingangs genannten Art das Wasserableitvermögen weiter zu verbessern, um auch unter ungünstigen Bedingungen und bei möglichst hoher Fahrgeschwindigkeit das Auftreten von Aquaplaning zu vermeiden. Dabei sollen die weiteren Reifen- bzw. Profileigenschaften, sei es die Geräuschentwicklung, der Laufflächenabrieb, Handling und Komfort, auf einem hohen Niveau gehalten werden können.

Gelöst wird die gestellte Aufgabe erfindungsgemäß dadurch, dass in den beiden seitlich der Äquatorlinie verlaufenden Teilbereichen des Mittelbereichs jeweils eine Vielzahl von gleichsinnig zum Verlauf der V-förmigen Rillen orientierte, mindestens drei in Umfangsrichtung aufeinander folgende V-förmige Rillen kreuzende und zumindest im Wesentlichen gerade ausgeführte Schrägnuten angeordnet ist, die unter einem wesentlich kleineren Winkel zur Äquatorlinie geneigt verlaufen als die V-förmigen Rillen und welche die breitesten aus sämtlichen Nuten bzw. Rillen des Profils sind, wobei die Schrägnuten des einen Teilbereichs des Mittelbereichs gegenüber jenen des anderen Teilbereichs in Umfangsrichtung versetzt sind.

Die erfindungsgemäße Kombination von V-förmig verlaufenden Rillen mit breiten, gleichsinnig zu den V-förmigen Rillen aber zur Umfangsrichtung wesentlich steiler verlaufenden Schrägnuten hat sich als besonders vorteilhaft für eine deutliche Verbesserung des Wasserableitvermögens herausgestellt. Die Schrägnuten bilden gemeinsam mit den V-förmig verlaufenden Rillen eine Vielzahl von Kanälen, die das Wasser zwangsweise auf die Seite verdrängen. Damit kann das bei Umfangsnuten oft beobachtete Ansammeln von Wassermengen vor dem Reifen, welches das Aufschwimmen verursacht, vermieden werden.

Bei einer bevorzugten Ausführungsform der Erfindung sind sämtliche zum Mittelbereich der Lauffläche gehörenden Nuten und Rillen zumindest abschnittweise drehsinngebunden ausgeführt (Anspruch 2). Diese Maßnahme trägt zu einer weiteren Optimierung des Wasserableitvermögens des Laufflächenprofils bei. In diesem Zusammenhang ist es günstig, wenn auch die in den Schulterbereichen verlaufenden Quernuten zumindest abschnittweise drehsinngebunden ausgeführt sind (Anspruch 3).

Für eine Optimierung der seitlichen Ableitung von Wasser ist es ferner günstig, wenn sich die V-förmig verlaufenden Rillen aus zumindest im Wesentlichen gerade verlaufenden Rillenteilen zusammensetzen, die einen Winkel von 30° bis 55° mit der Äquatorlinie einschließen (Ansprüche 4 und 5).

Als besonders vorteilhaft hat sich herausgestellt, wenn die Schrägnuten einen Winkel von 5° bis 15° mit der Äquatorlinie einnehmen (Anspruch 6). Gerade eine derartige Neigung der Schrägnuten kann wirkungsvoll das erwähnte Ansammeln von Wasser vor dem Reifen verhindern.

Das in den Schrägnuten strömende Wasser kann dann besonders effektiv zur Seite abgeleitet werden, wenn die Schrägnuten zumindest vier in Umfangsrichtung aufeinander folgende V-förmig verlaufende Rillen kreuzen (Anspruch 7).

Die Schrägnuten werden insbesondere mit spitz zusammenlaufenden Endabschnitten versehen, die innerhalb von Profilpositiven enden (Anspruch 8). Diese Maßnahme ist für die Steifigkeit der betreffenden Profilpositive von Vorteil.

Eine weitere, das Drainagevermögen der Lauffläche unterstützende Maßnahme besteht darin, dass die in einem der Teilbereiche des Mittelbereichs verlaufenden Schrägnuten in Umfangsrichtung derart aufeinander folgen, dass sie jeweils über einen Teil ihrer Erstreckung, insbesondere über mindestens ein Drittel, in seitlicher Überlappung verlaufen (Anspruch 9).

Eine Maßnahme, die vor allem das Abrollgeräusch günstig beeinflusst, besteht darin, dass die in dem einen Teilbereich des Mittelbereichs verlaufenden Schrägnuten gegenüber jenen, die im anderen Teilbereich verlaufen, in Umfangsrichtung versetzt sind (Anspruch 10).

Um dem Mittelbereich eine für einen gleichmäßigen Laufflächenabrieb und gute Fahreigenschaften günstige Stabilität zu verleihen, ist es von Vorteil, wenn die V-förmig verlaufenden Rillen zumindest zum überwiegenden Teil eine gegenüber der vollen Profiltiefe geringere Tiefe aufweisen (Anspruch 11).

Die mit geringerer Tiefe vorgesehen Abschnitte der V-förmig verlaufenden Rillen werden dabei bei einer bevorzugten Ausführungsform mittig und entlang ihrer Erstreckung mit einem Einschnitt geringer Breite versehen (Anspruch 12).

Eine Maßnahme, die für eine gleichmäßige Stabilität des Mittelbereichs günstig ist, besteht darin, dass jene zu den Umfangsnuten verlaufenden Abschnitte der V-förmig verlaufenden Rillen, die von laufstreifenaußenseitig gelegenen Endabschnitten der Schrägnuten gekreuzt sind, auf volle Profiltiefe ausgeführt sind (Anspruch 13).

In diesem Zusammenhang ist es auch von Vorteil, wenn die laufstreifenaußenseitig gelegenen und in Profilpositiven endenden Abschnitte der Schrägnuten mit einer gegenüber der vollen Profiltiefe geringeren Tiefe ausgeführt sind (Anspruch 14).

Für den Nassgriff des Laufflächenprofil ist es schließlich noch von günstig, wenn die die Umfangsnuten begrenzenden Kanten der Profilpositive und Schulterblöcke gegenüber der Äquatorlinie unter einem höchstens 5° betragenden Winkel und gleichsinnig zu den V-förmig verlaufenden Rillen geneigt sind (Anspruch 15).

Weitere Merkmale, Vorteile und Einzelheiten der Erfindung werden nun anhand der Zeichnung, die ein Ausführungsbeispiel darstellt, näher beschrieben. Dabei zeigt

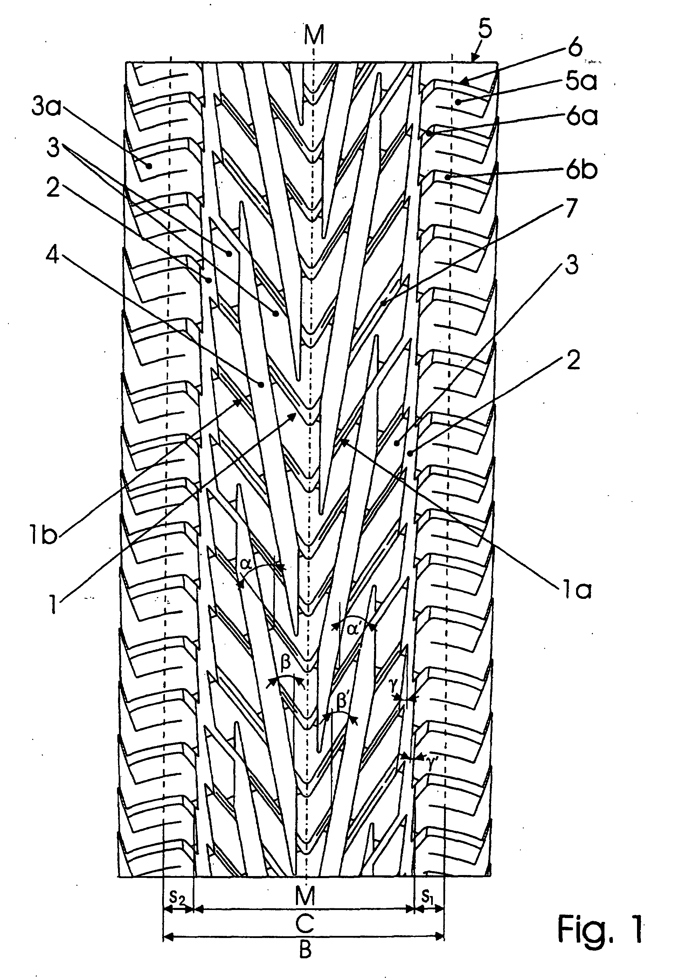

Fig. 1 eine Draufsicht auf eine Teilabwicklung eines gemäß der Erfindung gestalteten Laufflächenprofils.

Bei dem in Fig. 1 gezeigten Laufflächenprofil handelt es sich um ein insbesondere für PKW-Sommerreifen geeignetes Profil, insbesondere für Reifen, die für höhere Geschwindigkeiten vorgesehen sind. In der nachfolgenden Beschreibung wird die Ausgestaltung des Profils innerhalb der Breite B, die zumindest im Wesentlichen der Breite der Lauffläche in der Bodenaufstandsfläche (gemäß E.T.R.T.O. Standards Manual), demnach der Latschbreite, entspricht, beschrieben.

Das Laufflächenprofil besteht aus drei sich in Umfangsrichtung erstreckenden Bereichen, einem das Profil hauptsächlich prägenden Mittelbereich C und zwei übereinstimmend breiten Schulterbereichen S₁, S₂. Der Mittelbereich C nimmt zwischen 60 und 80 %, insbesondere mindestens 65 %, der Laufflächenbreite B ein und ist von den beiden Schulterbereichen S₁, S₂ durch in Umfangsrichtung umlaufende auf die vorgesehene Profiltiefe, beispielsweise 8mm, ausgeführte Nuten 2 getrennt, die als Bestandteile des Mittelbereichs C betrachtet werden. Das Laufflächenprofil ist drehsinngebunden ausgeführt, wobei bei der dargestellten Ausführungsform sämtliche Nuten bzw. Rillen die Drehsinngebundenheit mitbestimmen, indem sie selbst, zumindest abschnittweise, drehsinngebunden ausgeführt sind.

Jeder Schulterbereich S₁, S₂ ist Bestandteil einer Blockreihe 5, deren Blöcke 5a in Umfangsrichtung durch Quernuten 6 getrennt sind.

Der Mittelbereich C der Lauffläche wird durch eine Vielzahl von V-förmig verlaufenden Rillen 1 und eine Vielzahl von Schrägnuten 4 in Profilpositive 3, hier Profilblöcke, gegliedert. Die abgerundet ausgeführten Spitzen der V-förmig verlaufenden Rillen 1 befinden sich auf der Äquatorlinie M-M der Lauffläche und bestehen in jeder Laufflächenhälfte aus einem gerade verlaufenden und in die jeweilige Umfangsnut 2 mündenden Rillenteil 1a, 1b. Die in der einen (in Fig. 1 linken) Laufflächenhälfte verlaufenden Rillenteile 1a schließen mit der Umfangsrichtung des Reifens (Äquatorlinie M-M) einen spitzen Winkel α ein, der für sämtliche Rillen 1 gleich groß ist und zwischen 30° bis 50°, insbesondere etwa 40°, beträgt. Die gegensinnig zu diesen Rillenteilen 1a in der zweiten Laufflächenhälfte verlaufenden Rillenteile 1b schließen mit der Umfangsrichtung (Äquatorlinie M-M) einen spitzen Winkel α' ein, der jeweils geringfügig größer ist, insbesondere um 2° bis 7° größer ist, als der Winkel α des zugehörigen Rillenteils 1a in der anderen Laufflächenhälfte. Ein Reifen mit einer derartig ausgeführten Lauffläche ist so am Fahrzeug zu montieren, dass die V-Spitzen der Rillen 1 beim Abrollen des Reifens zuerst in die Kontaktfläche mit dem Untergrund eintreten. Die Differenz der Winkel α und α' hat zur Folge, dass die Profilpositive 3 in den beiden Laufflächenhälften nicht exakt symmetrisch zur Äquatorlinie M-M ausgeführt sind, wodurch eine für das Abrollgeräusch günstige Ungleichmäßigkeit in der Ausgestaltung der Lauffläche erzielt wird.

Die Breite der über ihren Verlauf insbesondere konstant breit ausgeführten V-förmig verlaufenden Rillen 1 beträgt zwischen 2 und 4 mm. Die Breite der Rillen 1 kann jedoch von Rille 1 zu Rille 1 variiert werden. Bei der dargestellten Ausführungsform sind die Rillen 1 jedenfalls schmäler ausgeführt als die Umfangsnuten 2 und die Schrägnuten 4.

In jedem seitlich der Äquatorlinie M-M verlaufenden Teilbereich des Mittelbereichs C ist jeweils eine Vielzahl von Schrägnuten 4 angeordnet, die gerade verlaufende Nuten sind, die nahezu in Umfangsrichtung, aber jeweils nur über eine bestimmte Strecke verlaufen und nicht in die Umfangsnuten 2 einmünden. Die in jedem Teilbereich des Mittelbereichs C angeordneten Schrägnuten 4 verlaufen zumindest im Wesentlichen parallel zueinander und sind gegenüber der Umfangsrichtung (Äquatorlinie M-M) unter einem vergleichsweise kleinen spitzen Winkel β bzw. β' von 5° bis 15°, insbesondere rund 10°, und jeweils gleichsinnig zur Neigung der Rillenteile 1a,1b geneigt, wobei der Winkel β' geringfügig größer als der Winkel β ist. Bei der dargestellten Ausführungsform kreuzt jede Schrägnut 4 fünf in Umfangsrichtung aufeinander folgende Rillen 1, sodass sich jede Schrägnut 4 über vier ganze sich über den Umfang wiederholende gleichartige Profilabschnitte (Pitches) erstreckt und jeweils innerhalb des in Umfangsrichtung jeweils anschließenden Profilabschnittes endet. Über den Großteil ihrer Erstreckung, etwa über rund drei Profilabschnitte, sind die Schrägnuten 4 konstant breit ausgeführt, insbesondere in einer Breite von 7 bis 8 mm, und sind in jedem Fall die breitesten Nuten bzw. Rillen des Laufflächenprofils. Ihre Enden sind spitz zulaufend gestaltet, indem an ihren laufflächeninnenseitig angeordneten Enden die laufflächeninnenseitig verlaufenden Nutkanten und an ihren anderen Enden die laufflächenaußenseitig verlaufenden Nutkanten über eine gewisse Länge, beispielsweise über rund 1,5 Profilabschnitte, zumindest im Wesentlichen in Umfangsrichtung orientiert sind.

Die laufflächeninnenseitig gelegenen Enden der Schrägnuten 4 reichen bis knapp zur Äquatorlinie M-M. Die laufflächenaußenseitig gelegenen Enden enden aus Stabilitätsgründen in einem gewissen Abstand von den beiden Umfangsnuten 2. Die diesbezügliche Anordnung dieser Enden liegt im Ermessen des Fachmannes.

In jedem Teilbereich des Mittelbereichs C überlappen in Querrichtung die in Umfangsrichtung aufeinander folgenden Schrägriuten 4, und zwar jeweils über mindestens ein Drittel ihrer Erstreckung. Die in dem einen Teilbereich des Mittelbereichs C verlaufenden Schrägnuten 4 sind gegenüber den im anderen Teilbereich verlaufenden Schrägnuten 4 in Umfangsrichtung versetzt und zwar derart, dass die laufstreifeninnenseitig gelegenen Enden der in dem einen Teilbereich verlaufenden Schrägnuten 4 jeweils etwa mittig zwischen zwei in Umfangsrichtung benachbarten Enden der im anderen Teilbereich verlaufenden Schrägnuten 4 enden. Darüber hinaus sind die im linken Teilbereich verlaufenden Schrägnuten 4 geringfügig länger ausgeführt als in der anderen Laufflächenhälfte. Dies ist eine Maßnahme zur Anpassung der Erstreckung der Schrägnuten 4 an den unterschiedlichen Verlauf der Rillenteile 1a, 1b.

Die die Umfangsnuten 2 laufstreifeninnenseitig begrenzenden Kanten der Profilpositive 3 des Mittelbereichs C sind gegenüber der Äquatorlinie M-M übereinstimmend zur Neigung der benachbarten Schrägnuten 4 geneigt. Der diesbezügliche Neigungswinkel γ ist ein sehr kleiner spitzer Winkel in der Größenordnung von 2° bis 5°. Laufstreifenaußenseitig sind die Umfangsnuten 2 durch die betreffenden Kanten der Blöcke 5a begrenzt, die unter einem Winkel γ' zur Äquatorlinie M-M geneigt verlaufen, wobei die Neigung gleichsinnig zur Neigung der Kanten der Profilpositive 3 ist. Der Winkel γ' ist etwas kleiner als der Winkel γ und beträgt insbesondere bis zu 3°. Somit sind bei der dargestellten Ausführungsform sämtliche im Mittelbereich C der Lauffläche verlaufenden Nuten 2, 4 und Rillen 1 entsprechend der Drehsinngebundenheit des Profils orientiert.

Die auch in den Schulterbereichen S₁, S₂ verlaufenden Quernuten 6 setzen sich aus zwei Quernutabschnitten 6a, 6b zusammen, wobei die Quernutabschnitte 6a in die Umfangsnuten 2 münden und bezüglich der Äquatorlinie M-M zumindest im Wesentlichen in Übereinstimmung mit der Orientierung bzw. Neigung der Rillenteile 1a, 1b verlaufen. Somit bestimmen auch die Quernuten 6 die drehsinngebundene Ausgestaltung der Lauffläche. Die zweiten Quernutabschnitte 6b verlaufen im Wesentlichen in Querrichtung, bei der dargestellten Ausführungsform sind sie gegenüber der Querrichtung der Lauffläche unter einem kleinen spitzen Winkel in der Größenordnung von 2° bis 10° und entgegen der Neigung der Rillen 1 des Profils orientiert. Dadurch wird die Stabilität des Laufflächenprofils bei Kurvenfahrt günstig beeinflusst. Die Quernutabschnitte 6b können aber auch in Übereinstimmung zur Orientierung der sonstigen Nuten und Rillen im Laufflächenprofil verlaufen.

Sowohl im Mittelbereich C als auch in den Schulterbereichen S₁, S₂ ist das Profil zur günstigen Beeinflussung des Abrollgeräusches in gleichartige, in Umfangsrichtung jedoch mit verschiedenen Umfangslängen ausgelegten Profilabschnitte (Pitches) gegliedert. Im Mittelbereich C umfassen die Profilabschnitte jeweils die zwischen zwei benachbarten Rillen 1 verlaufenden Profilpositive 3 und eine dieser Rillen 1 und sind in drei unterschiedlichen Umfangslängen vorgesehen, deren Aufeinanderfolge (Pitchfolge) rechnerisch ermittelt wird. Auch die beiden Schulterblockreihen 5 setzen sich aus gleichartigen Profilabschnitten, wobei jeder Profilabschnitt aus einem Block 5a und einer der anschließenden Quernuten 6 besteht, zusammen. Bei der dargestellten Ausführungsform sind auch für diese Profilabschnitte drei unterschiedliche Umfangslängen, die nicht bezeichnet sind, vorgesehen. Die Aufeinanderfolge der einzelnen Profilabschnitte der Schulterbereiche S₁, S₂ über den Laufflächenumfang ist ebenfalls rechnerisch ermittelt. Die beiden Schulterbereiche S₁, S₂ stimmen bezüglich der Pitchfolge und auch der Gesamtpitchanzahl überein, sind jedoch in Umfangsrichtung gegeneinander versetzt und weisen eine Gesamtpitchanzahl auf, die größer ist als die Gesamtpitchanzahl der Pitches bzw. Profilabschnitte im Mittelbereich C. Der Versatz ist eine Maßnahme, die eine für das Abrollgeräusch günstige Ungleichmäßigkeit unterstützt. Die kleinere Gesamtpitchanzahl im Mittelbereich C begünstigt die Stabilität der Profilpositive 3 und wirkt somit einem ungleichmäßigen Abrieb der Lauffläche entgegen. Durch die relativ große Neigung der Rillen 1 und der Schrägnuten 4 im Mittelbereich C könnte bei größerer Gesamtpitchanzahl die Umfangslänge der Profilpositive 3 zu gering werden.

Die V-förmig verlaufenden Rillen 1 sind großteils nicht auf die vorgesehene Profiltiefe ausgeführt, sondern weisen eine Tiefe auf, die 40 bis 70 %, insbesondere rund 50 %, der Profiltiefe entspricht. V-förmig verlaufende Rillen 1, die von einem laufstreifenaußenseitigen Ende einer Schrägnut 4 gekreuzt werden, weisen zu den Umfangsnuten 2 führende Rillenabschnitte auf, die auf volle Profiltiefe ausgeführt sind. Sämtliche anderen Rillen 1 bzw. sämtliche anderen Abschnitte der Rillen 1 sind mit geringerer Tiefe versehen. Rillen 1 oder Abschnitte von Rillen 1, die mit geringerer Tiefe ausgeführt sind, sind mittig, zumindest über einen Teil ihrer Länge, mit einem schmalen Einschnitt 7 versehen. Die Breite der Einschnitte 7 beträgt ca. 0,5 bis 0,6 mm. Die Einschnitte 7 reichen bevorzugt bis auf eine Tiefe, die zumindest der gesetzlichen Mindestprofiltiefe entspricht.

Die innerhalb eines Profilpositivs 3 endenden und spitz zusammen laufenden Endabschnitte der Schrägnuten 4 sind ebenfalls nicht auf volle Profiltiefe, sondern auf etwa 40 bis 70 %, insbesondere rund 50 %, derselben, ausgeführt. Auch dies eine das betreffende Profilpositiv 3 stabilisierende Maßnahme.

Wie ferner insbesondere Fig. 1 zeigt, sind sämtliche einen spitzen Winkel bildende Ecken der Profilpositive 3 bzw. der Schulterblöcke 5 in bekannter Weise abgeschrägt, um einem ungleichmäßigen Laufflächenabrieb entgegenzuwirken.

Die Erfindung ist auf das dargestellte Ausführungsbeispiel nicht eingeschränkt, so sind insbesondere die in der Beschreibung angeführten Dimensionsangaben, beispielsweise für Breiten von Nuten und Rillen oder Winkel bevorzugte Werte, die variiert werden können. Die Schrägnuten und/oder die V-förmigen Rillen können ferner einen leicht geschwungenen Verlauf aufweisen. Die schulterseitig gelegenen Umfangsnuten können abweichend ausgeführt sein, insbesondere einen geraden Verlauf aufweisen. Die Schrägnuten können auch mit geringerer Erstreckung ausgeführt werden, sollten jedoch zumindest drei V-förmig verlaufende Rillen kreuzen.

## Patentansprüche

1. Fahrzeugluftreifen mit einem drehsinngebunden ausgeführten Laufflächenprofil mit zwei Schulterbereichen (S₁, S₂), die jeweils Bestandteile einer Schulterblockreihe sind, und mit einem von diesen durch in Umfangsrichtung umlaufende Umfangsnuten (2) getrennten Mittelbereich (C), welcher, unter Einschluss der Breite der Umfangsnuten (2), eine Mindestbreite von 60 % der Laufflächenbreite (B) aufweist, von in Umfangsrichtung durchgehend umlaufenden Umfangsnuten frei ist und mit einer Vielzahl von V-förmig verlaufenden Rillen (1) versehen ist, die in die Umfangsnuten (2) münden und deren V-Spitzen zumindest im Wesentlichen auf der Äquatorlinie (M-M) liegen,
**dadurch gekennzeichnet,**
**dass** in den beiden seitlich der Äquatorlinie (M-M) verlaufenden Teilbereichen des Mittelbereichs (C) jeweils eine Vielzahl von gleichsinnig zum Verlauf der V-förmigen Rillen (1) orientierte, mindestens drei in Umfangsrichtung aufeinander folgende V-förmige Rillen (1) kreuzende und zumeist im Wesentlichen gerade ausgeführte Schrägnuten (4) angeordnet ist, welche Schrägnuten (4) unter einem wesentlich kleineren Winkel (β, β') zur Äquatorlinie (M-M) geneigt verlaufen als die V-förmigen Rillen (1) und welche die breitesten aus sämtlichen Nuten bzw. Rillen des Profils sind, wobei die Schrägnuten (4) des einen Teilbereichs des Mittelbereichs (C) gegenüber jenen des anderen Teilbereichs in Umfangsrichtung versetzt sind.

2. Fahrzeugluftreifen nach Anspruch 1, **dadurch gekennzeichnet, dass** sämtliche zum Mittelbereich (C) der Lauffläche gehörende Nuten und Rillen zumindest abschnittweise drehsinngebunden ausgeführt sind.

3. Fahrzeugluftreifen nach Anspruch 1 oder 2, **dadurch gekennzeichnet, dass** auch die in den Schulterbereichen (S₁, S₂) verlaufenden Quernuten (6) zumindest abschnittweise drehsinngebunden ausgeführt sind.

4. Fahrzeugluftreifen nach einem der Ansprüche 1 bis 3, **dadurch gekennzeichnet, dass** sich die V-förmig verlaufenden Rillen (1) aus zumindest im Wesentlichen gerade verlaufenden Rillenteilen (1a, 1b) zusammensetzen.

5. Fahrzeugluftreifen nach einem der Ansprüche 1 bis 4, **dadurch gekennzeichnet, dass** die Rillenteile (1a, 1b) der V-förmig verlaufenden Rillen (1) einen Winkel (α, α') von 30° bis 55° mit der Äquatorlinie (M-M) einschließen.

6. Fahrzeugluftreifen nach einem der Ansprüche 1 bis 5, **dadurch gekennzeichnet, dass** die Schrägnuten (4) einen Winkel β, β') von 5° bis 15° mit der Äquatorlinie (M-M) einschließen.

7. Fahrzeugluftreifen nach einem der Ansprüche 1 bis 6, **dadurch gekennzeichnet, dass** die Schrägnuten (4) vier in Umfangsrichtung aufeinander folgende V-förmig verlaufende Rillen (1) kreuzen.

8. Fahrzeugluftreifen nach einem der Ansprüche 1 bis 6, **dadurch gekennzeichnet, dass** die Schrägnuten (4) spitz zusammenlaufende Endabschnitte aufweisen, die innerhalb von Profilpositiven (3) enden.

9. Fahrzeugluftreifen nach einem der Ansprüche 1 bis 8, **dadurch gekennzeichnet, dass** die in einem der Teilbereiche des Mittelbereichs (C) verlaufenden Schrägnuten (4) in Umfangsrichtung derart aufeinander folgen, dass sie jeweils über einen Teil ihrer Erstreckung, insbesondere mindestens ein Drittel, in seitlicher Überlappung verlaufen.

10. Fahrzeugluftreifen nach einem der Ansprüche 1 bis 9, **dadurch gekennzeichnet, dass** die in dem einen Teilbereich des Mittelbereichs (C) verlaufenden Schrägnuten (4) gegenüber jenen, die im anderen Teilbereich verlaufen, in Umfangsrichtung versetzt sind.

11. Fahrzeugluftreifen nach einem der Ansprüche 1 bis 10, **dadurch gekennzeichnet, dass** die V-förmig verlaufenden Rillen (1) zumindest zum überwiegenden Teil eine gegenüber der vollen Profiltiefe geringere Tiefe aufweisen.

12. Fahrzeugluftreifen nach Anspruch 11, **dadurch gekennzeichnet, dass** die mit geringerer Tiefe vorgesehenen Abschnitte der V-förmig verlaufenden Rillen (1) mittig und entlang ihrer Erstreckung mit einem Einschnitt (7) geringer Breite versehen sind.

13. Fahrzeugluftreifen nach einem der Ansprüche 1 bis 12, **dadurch gekennzeichnet, dass** jene zu den Umfangsnuten (2) verlaufenden Abschnitte der V-förmig verlaufenden Rillen (1), die von laufstreifenaußenseitig gelegenen Endabschnitten der Schrägnuten (4) gekreuzt sind, auf volle Profiltiefe ausgeführt sind.

14. Fahrzeugluftreifen nach einem der Ansprüche 1 bis 12, **dadurch gekennzeichnet, dass** die laufstreifenaußenseitig gelegenen und in Profilpositiven (3) endenden Abschnitte der Schrägnuten (4) mit einer gegenüber der vollen Profiltiefe geringeren Tiefe ausgeführt sind.

15. Fahrzeugluftreifen nach einem der Ansprüche 1 bis 14, **dadurch gekennzeichnet, dass** die die Umfangsnuten (2) begrenzenden Kanten der Profilpositive (3) und Schulterblöcke (5a) gegenüber der Äquatorlinie (M-M) unter einem höchstens 5° betragenden Winkel (γ, γ') und gleichsinnig zu den V-förmig verlaufenden Rillen (1) geneigt sind.

## Claims

1. Pneumatic vehicle tyre having a tread surface profile which is adapted to the direction of rotation and has two shoulder regions (S₁,S₂) , which are each constituent parts of a shoulder row of blocks, and having a middle region (C), which is separated from these shoulder regions by circumferential grooves (2) running in the circumferential direction, and which, including the width of the circumferential grooves (2), has a minimum width of 60% of the tread surface width (B), is free of circumferential grooves running continuously in the circumferential direction and is provided with a large number of grooves (1) extending in a V-shape, these grooves opening out into the circumferential grooves (2) and their V-tips lying at least substantially on the equatorial line (M-M),
**characterised in that**
in the two partial regions of the middle region, which extend to the side of the equatorial line (M-M), is arranged in each case a large number of slanting grooves (4), which are oriented in the same direction as the course of the V-shaped grooves (1), cross at least three successive V-shaped grooves (1) in the circumferential direction and are at least substantially straight, which slanting grooves (4) extend inclined at a substantially smaller angle (β,β') with respect to the equatorial line (M-M) than the V-shaped grooves (1), and which are the widest of all the grooves of the profile, the slanting grooves (4) of the one partial region of the middle region (C) being offset in the circumferential direction with respect to those of the other partial region.

2. Pneumatic vehicle tyre according to claim 1, **characterised in that** all the grooves belonging to the middle region (C) of the tread surface are designed adapted to the direction of rotation, at least in sections.

3. Pneumatic vehicle tyre according to claim 1 or 2, **characterised in that** the transverse grooves (6) extending in the shoulder regions (S₁, S₂) are also designed adapted to the direction of rotation, at least in sections.

4. Pneumatic vehicle tyre according to one of claims 1 to 3, **characterised in that** the grooves (1) extending in a V-shape are composed of groove portions (1a, 1b) which extend substantially straight.

5. Pneumatic vehicle tyre according to one of claims 1 to 4, **characterised in that** the portions (1a, 1b) of the grooves (1) extending in a V-shape enclose an angle (α, α') of 30° to 55° with the equatorial line (M-M).

6. Pneumatic vehicle tyre according to one of claims 1 to 5, **characterised in that** the slanting grooves (4) enclose an angle (β,β') of 5° to 15° with the equatorial line (M-M).

7. Pneumatic vehicle tyre according to one of claims 1 to 6, **characterised in that** the slanting grooves (4) cross four grooves (1) which extend in a V-shape and succeed one another in the circumferential direction.

8. Pneumatic vehicle tyre according to one of claims 1 to 6, **characterised in that** the slanting grooves (4) have end sections which meet in a point and end inside positive profile portions (3).

9. Pneumatic vehicle tyre according to one of claims 1 to 8, **characterised in that** the slanting grooves (4) extending in one of the partial regions of the middle region (C) succeed one another in the circumferential direction in such a way that they respectively overlap laterally over part of their length, especially over at least a third of same.

10. Pneumatic vehicle tyre according to one of claims 1 to 9, **characterised in that** the slanting grooves (4) which extend in the one partial region of the middle region (C) are offset in the circumferential direction with respect to those which extend in the other partial region.

11. Pneumatic vehicle tyre according to one of claims 1 to 10, **characterised in that** the grooves (1) extending in a V-shape have at least predominantly a smaller depth than the full profile depth.

12. Pneumatic vehicle tyre according to claim 11, **characterised in that** the sections of the V-shaped grooves (1) which are provided with the smaller depth are provided centrally and along their length with an incision (7) of lesser width.

13. Pneumatic vehicle tyre according to one of claims 1 to 12, **characterised in that** those sections of the V-shaped grooves (1) which extend to the circumferential grooves (2) and are crossed by end sections of the slanting grooves (4) located on the outside of the tread strip, are designed with the full profile depth.

14. Pneumatic vehicle tyre according to one of claims 1 to 12, **characterised in that** the sections of the slanting grooves (4) which are located on the outside of the tread strip and end in positive profile portions (3) are designed with a smaller depth than the full profile depth.

15. Pneumatic vehicle tyre according to one of claims 1 to 14, **characterised in that** the edges of the positive profile portions (3) and shoulder blocks (5a) delimiting the circumferential grooves are inclined with respect to the equatorial line (M-M) at an angle (γ,γ') of at the most 5° and are inclined in the same direction as the grooves (1) extending in a V-shape.

## Revendications

1. Pneumatique de véhicule comprenant une sculpture de bande de roulement réalisée en fonction du sens de rotation et dotée de deux zones d'épaulement (S₁, S₂) qui sont, respectivement, des parties constitutives d'une rangée de crampons d'épaulement, et dotée d'une zone centrale (C) séparée par des rainures circonférentielles (2) s'étendant dans la direction circonférentielle, laquelle zone centrale présente, en englobant la largeur des rainures circonférentielles (2), une largeur minimum égale à 60 % de la largeur (B) de la bande de roulement, ladite zone centrale étant exempte de rainures circonférentielles s'étendant de façon continue dans la direction circonférentielle et est dotée d'un grand nombre de stries (1) s'étendant en forme de V, lesquelles stries débouchent dans les rainures circonférentielles (2) et les pointes en V de ces stries se trouvent au moins pratiquement sur la ligne équatoriale (M - M), **caractérisé en ce que**, dans les deux zones partielles de la zone centrale (C) s'étendant latéralement par rapport à la ligne équatoriale (M - M), est disposé, à chaque fois, un grand nombre de rainures obliques (4) orientées dans le même sens par rapport au profil des stries (1) en forme de V, croisant au moins trois stries (1) en forme de V se suivant dans la direction circonférentielle et réalisées le plus souvent de façon pratiquement droite, lesquelles rainures obliques (4) s'étendent en étant inclinées par rapport à la ligne équatoriale- (M - M), suivant un angle (β, β') nettement plus petit que les stries (1) en forme de V, et sont les rainures ou stries les plus larges parmi toutes celles de la sculpture, où les rainures obliques (4) d'une zone partielle de la zone centrale (C) sont décalées, dans la direction circonférentielle, par rapport à celles de l'autre zone partielle.

2. Pneumatique de véhicule selon la revendication 1, **caractérisé en ce que** toutes les rainures et stries faisant partie de la zone centrale (C) de la bande de roulement sont réalisées au moins partiellement en fonction du sens de rotation.

3. Pneumatique de véhicule selon la revendication 1 ou 2, **caractérisé en ce que** les rainures transversales (6) s'étendant dans les zones d'épaulement (S₁, S₂) sont réalisées également au moins partiellement en fonction du sens de rotation.

4. Pneumatique de véhicule selon l'une quelconque des revendications 1 à 3, **caractérisé en ce que** les stries (1) s'étendant en forme de V se composent de parties de rainures (1a, 1b) s'étendant au moins pratiquement de façon droite.

5. Pneumatique de véhicule selon l'une quelconque des revendications 1 à 4, **caractérisé en ce que** les parties de stries (1a, 1b) des stries (1) s'étendant en forme de V forment, avec la ligne équatoriale (M - M), un angle (α, α') compris entre 30° et 55°.

6. Pneumatique de véhicule selon l'une quelconque des revendications 1 à 5, **caractérisé en ce que** les rainures obliques (4) forment, avec la ligne équatoriale (M - M), un angle (β, β') compris entre 5° et 15°.

7. Pneumatique de véhicule selon l'une quelconque des revendications 1 à 6, **caractérisé en ce que** les rainures obliques (4) croisent quatre stries (1) s'étendant en forme de V et se suivant dans la direction circonférentielle.

8. Pneumatique de véhicule selon l'une quelconque des revendications 1 à 6, **caractérisé en ce que** les rainures obliques (4) présentent des parties d'extrémités convergeant en pointe, lesquelles parties d'extrémités se terminent à l'intérieur de parties positives (3) de la sculpture.

9. Pneumatique de véhicule selon l'une quelconque des revendications 1 à 8, **caractérisé en ce que** les rainures obliques (4) s'étendant dans l'une des zones partielles de la zone centrale (C) se suivent dans la direction circonférentielle de manière telle, que lesdites rainures obliques, à chaque fois, s'étendent en suivant un chevauchement latéral sur une partie de leur étendue, en particulier au moins sur un tiers de leur étendue.

10. Pneumatique de véhicule selon l'une quelconque des revendications 1 à 9, **caractérisé en ce que** les rainures obliques (4) s'étendant dans une zone partielle de la zone centrale (C) sont décalées dans la direction circonférentielle, par rapport à celles qui s'étendent dans l'autre zone partielle.

11. Pneumatique de véhicule selon l'une quelconque des revendications 1 à 10, **caractérisé en ce que** les stries (1) s'étendant en forme de V présentent, au moins sur la plus grande partie, une profondeur moins importante par rapport à la profondeur totale de la sculpture.

12. Pneumatique de véhicule selon la revendication 11, **caractérisé en ce que** les parties des stries (1) s'étendant en forme de V, prévues en ayant une profondeur moins importante, sont dotées, au milieu et le long de leur étendue, d'une entaille (7) de faible largeur.

13. Pneumatique de véhicule selon l'une quelconque des revendications 1 à 12, **caractérisé en ce que** ces parties - s'étendant par rapport aux rainures circonférentielles (2) - des rainures (1) s'étendant en forme de V, qui sont croisées par des parties d'extrémités des rainures obliques (4), situées côté extérieur de la bande de roulement, sont réalisées sur toute la profondeur de la sculpture.

14. Pneumatique de véhicule selon l'une quelconque des revendications 1 à 12, **caractérisé en ce que** les parties d'extrémités des rainures obliques (4), situées côté extérieur de la bande de roulement et se terminant dans des parties positives (3) de la sculpture, sont réalisées en ayant une profondeur moins importante par rapport à la profondeur totale de la sculpture.

15. Pneumatique de véhicule selon l'une quelconque des revendications 1 à 14, **caractérisé en ce que** les bords des parties positives (3) de la sculpture et des crampons d'épaulement (5a) , délimitant les rainures circonférentielles (2), sont inclinés par rapport à la ligne équatoriale (M - M), suivant un angle (γ, γ') égal au maximum à 5°, et inclinés, dans le même sens, par rapport aux stries (1) s'étendant en forme de V.
